# EUROPEAN PATENT SPECIFICATION

(11) **EP 1 816 063 B1**
(45) Date of publication and mention of the grant of the patent: **12.09.2012**
(21) Application number: 07001158.0
(22) Date of filing: 19.01.2007
(51) Int. Cl.: B62K 25/28

(54) **Rear-wheel suspension for two-wheeled vehicle**
Hinterradaufhängung für Zweiradfahrzeuge
Suspension de roue arrière pour véhicule à deux roues

(30) Priority: 01.02.2006 JP 2006024335
(43) Date of publication of application: 08.08.2007
(73) Proprietor: Honda Motor Co., Ltd., Tokyo 107-8556 (JP)
(72) Inventor: Gogo, Kazuhiko, Wako-shi Saitama 351-0193 (JP); Fuse, Tomohiro, Wako-shi Saitama 351-0193 (JP); Uchiyama, Mikio, Wako-shi Saitama 351-0193 (JP); Adachi, Eiji, Wako-shi Saitama 351-0193 (JP); Honda, Taichi, Wako-shi Saitama 351-0193 (JP)
(74) Representative: Liska, Horst

(56) References cited:
- EP-A- 1 418 364
- EP-A2- 1 449 758
- WO-A-2005/002953
- US-A- 4 273 220
- US-A1- 2005 046 141
- US-A1- 2005 082 104
- US-A1- 2005 178 626

## Description

### Technical Field

The present invention relates to a rear-wheel suspension system for a two-wheeled vehicle.

### Background Art

In the past, there has been known a rear-wheel suspension system for a two-wheeled vehicle having a swing arm, a front portion of which is pivotally supported by a vehicle body frame extending rearwardly from a head pipe and a rear portion of which is made to support a rear wheel and a cushion unit, disposed such that its longitudinal direction coincides with a vertical direction, an upper portion of which is pivotally supported between center frames and a rear portion of which is pivotally supported by the swing arm.

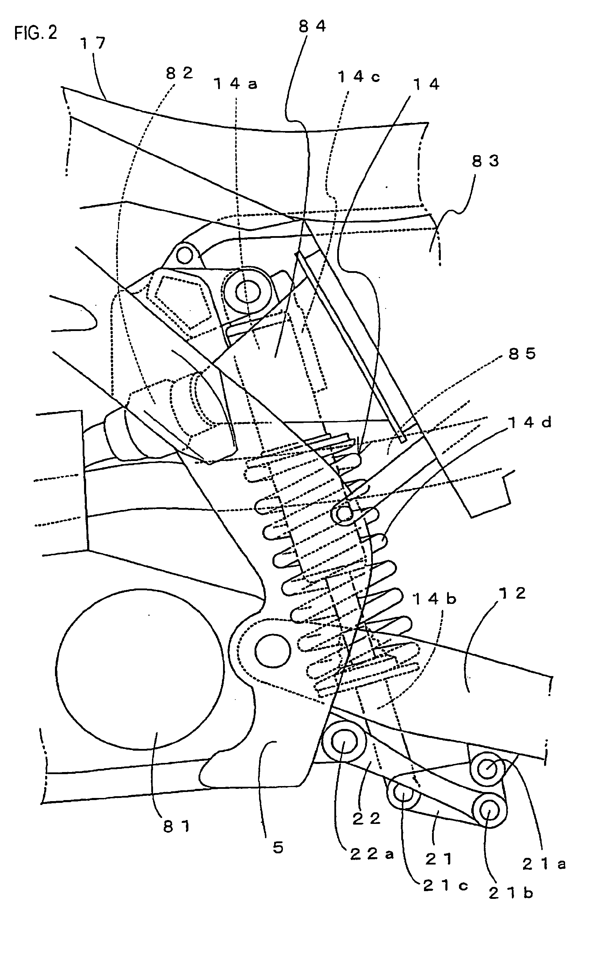

The related-art cushion unit is disposed such that a buffer is positioned above it and a coil spring is positioned in a state brought close thereto, and a vehicle body component part such as an outlet case is placed at a lateral position of the coil spring (for example, see JP-Y No. 2522667 (Page 2, Fig. 2)).

### Problem to be Solved by the Invention

Thus, in the related-art rear-wheel suspension system for a two-wheeled vehicle, the buffer and the coil spring are disposed to be close to each other, which requires a space corresponding to the outer diameter of the spring, and the vehicle body component part such as the outlet case is disposed at a lateral position of the coil spring, which imposes a limitation on slimming.

Therefore, the present invention has been developed in consideration of such a situation, and it is an object of the invention to provide a rear-wheel suspension system for a two-wheeled vehicle, capable of further slim the vehicle width.

### Means for Solving the Problem

For achieving this technical object, a rear-wheel suspension system for a two-wheeled vehicle according to the present invention employs the following technical measures.

That is a two-wheeled vehicle with a rear-wheel suspension system according to claim 1 has a pair of right- and left-side center frames (5) connected to a rear portion of a main frame (4) extending rearwardly from a head pipe (3) and extending downwardly; a swing arm (12) a front portion of which is pivotally supported by the center frames (5) and a rear portion of which is made to support a rear wheel (9); and a cushion unit (14), disposed such that its longitudinal direction coincides with a vertical direction, an upper portion of which is pivotally supported on a vehicle body side between the center frames (5) and a lower portion of which is pivotally supported on the swing arm (12) side,
wherein the cushion unit (14) includes a tubular damper case (14a) internally including a cylinder (14g), a rod (14b) connected to a piston (14h) arranged within the cylinder (14g) and a spring (14d) disposed around the cushion unit (14), and
wherein a connecting tube (84) connects a throttle body (82) placed in front of the cushion unit (14) and an air cleaner (83) placed in the rear of the cushion unit (14),
and is characterized in that
the cushion unit (14) further includes a sub-tank (14c) integrally connected to the damper case (14a),
the connecting tube (84) and the sub-tank (14c) are arranged at the right and left sides, respectively, in a state where the damper case (14a) is interposed therebetween,
an upper end of the spring (14d) is positioned to be lower than an upper end of the damper case (14a), and
the connecting tube (84) and the sub-tank (14c) are disposed to be close to the damper case (14a) above the spring (14d).

In the two-wheeled vehicle according to claim 2, combined with claim 1, a muffler (86) is placed on the sub-tank (14c) side and an exhaust pipe (85) connected to the muffler (86) and secured to the exhaust side of an engine (81) of the two-wheeled vehicle is arranged below the sub-tank (14c).

It the two-wheeled vehicle according to claim 3, combined with claim 1, the lower portion of the sub-tank (14c) is slightly inclined outwardly to make a required angle (8).

In the two-wheeled vehicle according to claim 4, combined with claim 1, the upper end of the spring (14d) is positioned to be lower than an upper end of the cylinder (14g) and the sub-tank (14c) is integrally formed in a state brought close to the cylinder (14g) above the spring (14d) so as to combine a portion of a wall surface constituting the cylinder and a portion of a wall surface constituting the sub-tank (14c).

US-A- 2005/0046141 discloses a two-wheeled vehicle having the features of the preamble of claim 1.

### Effect of the Invention

According to the present invention, a buffer constituting a cushion unit is disposed on an upper side while a ring-like mounting position of a coil spring is placed on an lower side and a vehicle body component part is disposed to be brought close to or abut on the buffer above the coil spring, which enables the vehicle body component part to be shifted toward the interior side of the vehicle body by a dimension corresponding to the coil spring, thus further slimming the vehicle width.

### Brief Description of the Drawings

Fig. 1 is a side-elevational view showing a two-wheeled vehicle to which applied is a rear-wheel suspension system for a two-wheeled vehicle according to this embodiment.
Fig. 2 is an enlarged side-elevational view showing an essential part of the present invention in Fig. 1.
Fig. 3 is a plan view simply showing a center frame and peripheral portions as the essential part of the present invention.
Fig. 4 is a front-elevational view simply showing a cushion unit and peripheral portions as the essential part of the present invention.
Fig. 5 is a vertical cross-sectional view showing a cushion unit.

Next, a description will be given of an embodiment of a rear-wheel suspension system for a two-wheeled vehicle according to the present invention. As an example, the rear-wheel suspension system for a two-wheeled vehicle according to the present invention is applied to an off-road two-wheeled vehicle in which mounted is a four-cycle single-cylinder engine, and a detailed description will be omitted except a construction section of a rear-wheel suspension system which forms an essential part.

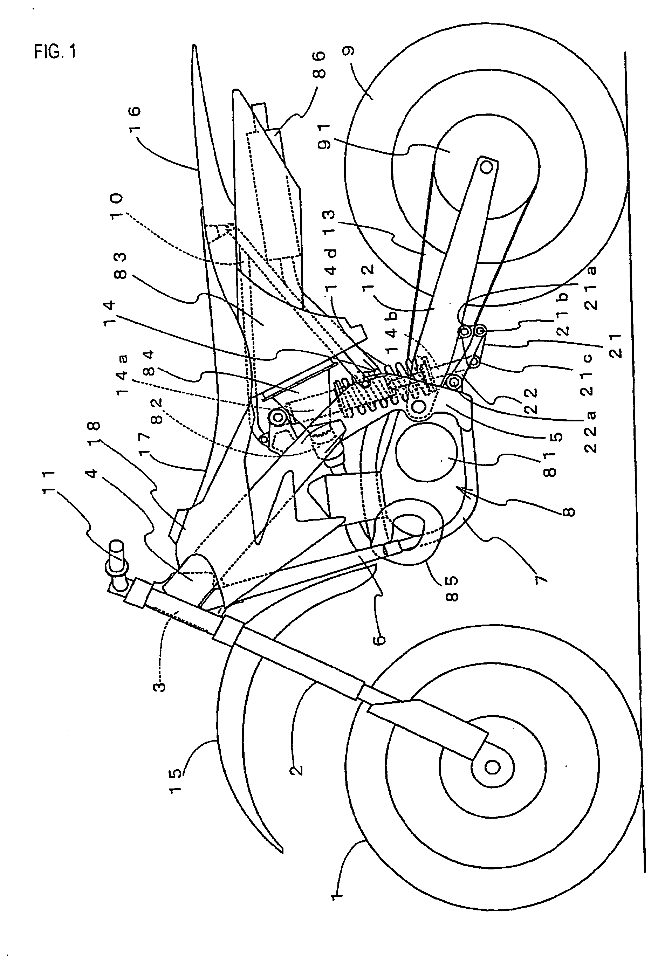

As shown in Fig. 1, the basic construction of a motorcycle according to this embodiment has a front suspension 2 made to support a front wheel 1 pivotally, a head pipe 3 made to support the front suspension 2 pivotally, a main frame 4 made to extend in a two-branch fashion rearwardly from the head pipe 3, a pair of right-side and left-side center frames 5 connected to a rear portion of the main frame 4 and extending downwardly, a down frame 6 and lower frame 7 joined so as to connect lower portions of the center frames 5 and the head pipe 3, a power unit 8 including a four-cycle single-cylinder engine, a seat rail 10 made to extend to above a rear wheel 9 attached to the center frames 5, a handlebar 11 connected to the front suspension 2, a swing arm 12 a front portion of which is pivotally supported by the center frames 5 and a rear portion of which is made to support the rear wheel 9, a sprocket 91 and chain 13 made to transmit the driving force of the power unit 8 to the rear wheel 9, a cushion unit 14, disposed such that its longitudinal direction coincides with a vertical direction, an upper portion of which is pivotally supported between the center frames 5 and a lower portion of which is rotationally supported through a link mechanism, a front fender 15 placed to cover the front wheel 1, a rear fender 15 placed to cover the rear wheel 9,a seat 17 set on the seat rail 10 and a fuel tank 18 located at an upper portion of a front side of the vehicle body, with the two-wheeled vehicle self-moving by a handlebar operation, throttle operation and others by a rider sitting on the seat 17.

The above-mentioned power unit 8 includes a four-cycle single-cylinder engine 81 located in a region defined by the main frame 4, the center frames 5, the down frame 6 and the lower frame 7, a throttle body 82 attached to an intake side of the engine 81, an air cleaner 83, a connecting tube (intake system part) 84 for making a connection between the throttle body 82 and the air cleaner 83 and a muffler 86 equipped with an exhaust pipe 85 and secured to the exhaust side of the engine 81.

Furthermore, a detailed description will be given of a rear-wheel suspension system which is an essential part of the present invention.
The rear-wheel suspension according to this embodiment has, of the above-mentioned construction of the motorcycle, the center frames 5, the swing arm 12, the cushion unit 14 and the connecting tuber 84 (intake system part).

The center frames 5 are a pair of right-side and left-side frames each of which is connected to each of rear portions of the main frame 4 extending in a two-branch fashion rearwardly from the head pipe 3 and, as shown in Fig. 2, a cross pipe 19 is laid to make a connection between upper parts of the center frames 5. Moreover, in the vicinity of the cross pipe 19 for the center frames 5, cushion blankets 20, each having a bearing portion 20a made therein, extend to confront each other toward their insides.

The swing arm 12 is shaped into a plan-viewed gate configuration so that a front portion thereof is pivotally supported by lower portions of the center frames 5 to be swingable in vertical directions, while the rear wheel 9 is supported by a rear portion thereof to be rotatable. At a portion under the front side of the swing arm 12, a first pivotally supporting portion 21 a of a first link member 21 having a generally triangular configuration, provided in confronting relation thereto, is pivotally supported, and a second pivotally supporting portion 21 b formed at a lower position than the first pivotally supporting section 21 a is pivotally engaged with a bar-like second link member 22 pivotally supported by a fourth pivotally supporting portion 22a provided in the center frames 5 at a lower position than a pivotally supporting portion between the center frames 5 and the swing arm 12. Moreover, a third pivotally supporting portion 21c positioned in front of the first link member 21 with the generally triangular configuration is pivotally supported by the tip of a rod 14b.

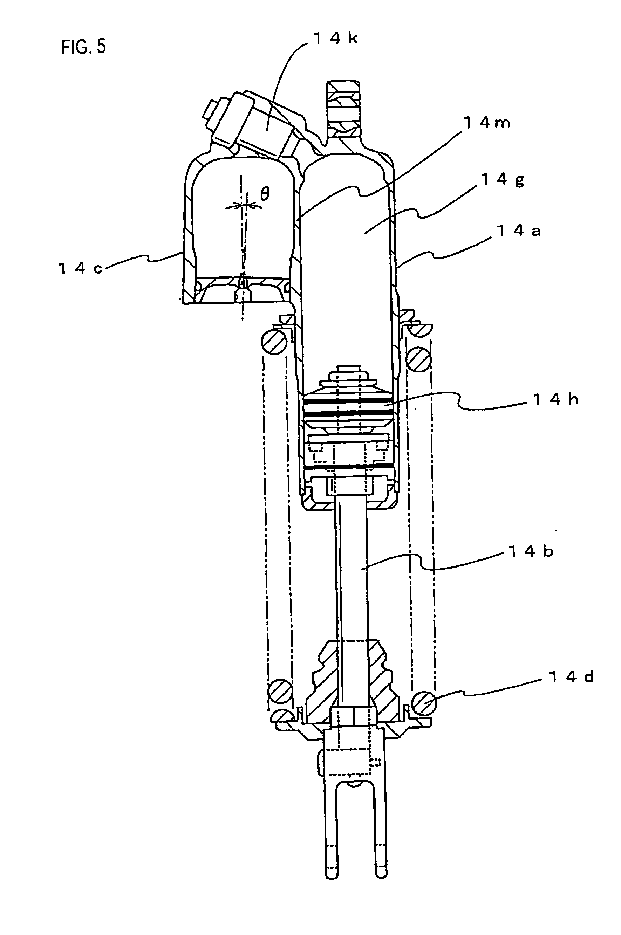

As shown in Figs. 2 and 5, the cushion unit (buffer) 14 is a so-called shock absorber having a tubular damper case 14a internally including a cylinder 14g, the rod 14b connected to a piston 14h protrusively put in the interior of the damper case 14a to be capable of making strokes with respect to the damper case 14a, and an external hydraulic sub-tank 14c (vehicle body component part), with a coil spring 14d being circularly mounted so as to extend over the rod 14b and the damper case 14a.

In addition, in comparison with a related-art one, in the case of this cushion unit 14, the position of the coil spring 14d is shifted more downwardly, and the sub-tank 14c (vehicle body component part) and the damper case 14a are integrated through a wall surface 14m, combining them, to form a housing so that they are placed side by side in a vehicle width direction, and the cylinder 14g communicates through a damping force control valve 14k with the interior of the sub-tank 14c.
As shown in Fig. 5, the center line of the sub-tank 14c is not in parallel with the center lines of the damper case 14a, the rod 14b and others, and a lower portion of the sub-tank 14c is slightly inclined outwardly to make a required angle θ (preferably, approximately 2°), which improves the workability of the sub-tank 14c.

In the cushion unit 14 thus constructed, a first fitting portion 14e lying on an upper side of the damper case 14a is pivotally supported between the bearing portions 20a of the cushion brackets 20 formed protrusively to confront the insides of the center frames 5, and a second fitting portion 14f provided on a tip portion of the rod 14b is pivotally supported by the third pivotally supporting portion 21 c of the first link member 21 provided at a lower portion near the front side of the swing arm 12, and as shown in Figs. 1 to 3, the damper case 14a is fitted to be slightly inclined in the forward direction and is located at a generally central position in the vehicle width direction.

In this embodiment, the cushion unit 14 and the swing arm 12 are connected to each other through the first link member 21 and the second link member 22, thereby varying the stroke amount of the rod 14b with respect to the swinging angle of the rear wheel 9. That is, although a sufficient cushion characteristic is obtainable when the rear wheel 9 lowers deeply, there is no restriction on this, but it is also appropriate that the cushion unit 14 and the swing arm 12 are directly connected to each other.

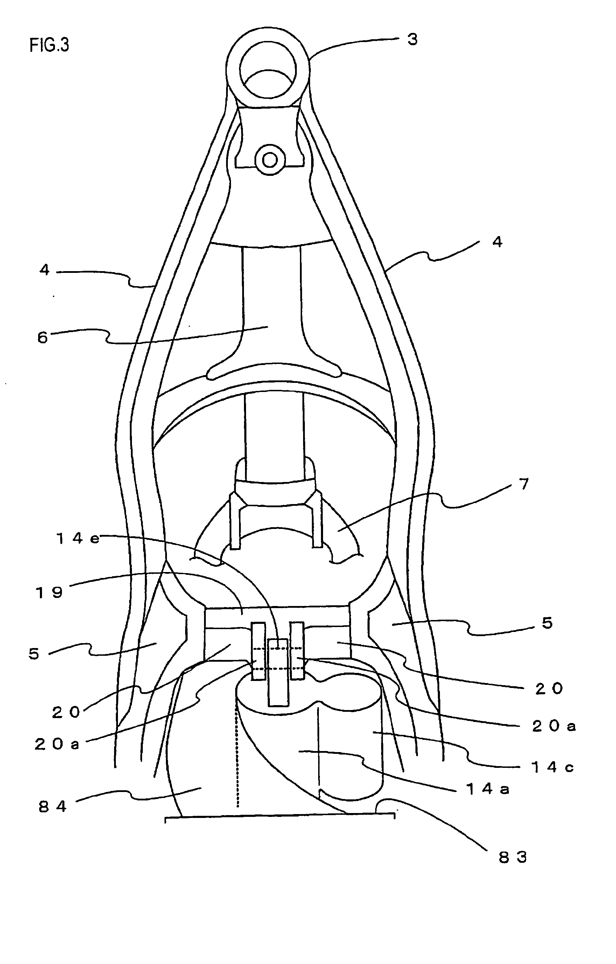

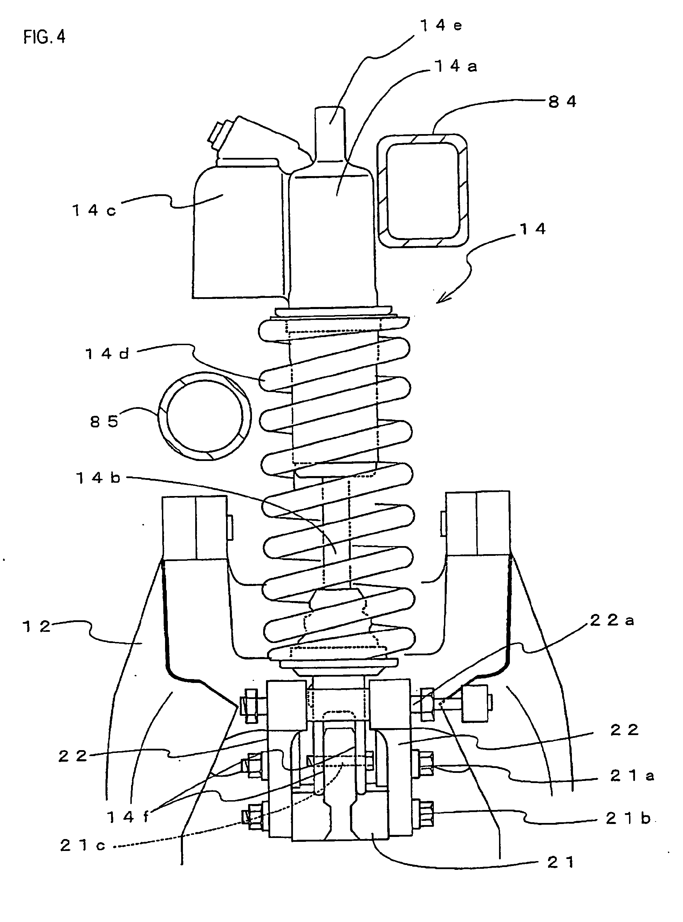

As shown in Figs. 1 and 2, the connecting tube 84 (intake system part) is a curved tubular member for making a connection between the throttle body 82 placed in front of the cushion unit 14 and the air cleaner 83 placed in the rear of the cushion unit 14 and, as shown in Figs. 3 and 4, it is disposed to be close to the damper case 14a so as to detour from the opposite side to the sub-tank 14c.

The connecting tube 84 and the sub-tank 14c are located at the right and left sides, respectively, in a state where the damper case 14a is interposed therebetween, and the muffler 86 is placed on the sub-tank 14c side.

Since it is not easy to change the height layout of this connecting tube 84 greatly from the viewpoint of the layout of the power unit 8, in a state where this height position is taken as an absolute position, according to this embodiment, the position of the coil spring 14d is shifted downwardly so that the connecting tube 84 and the sub-tank 14c are moved toward the interior of the vehicle body by a dimension corresponding to the coil spring 14d.

As described above, in the rear-wheel suspension system according to this embodiment, the position of the coil spring 14d is shifted downwardly so as to move vehicle body component parts such as the connecting tube 84 and the sub-tank 14c toward the interior of the vehicle body by a dimension corresponding to the coil spring 14d, which can further slim the vehicle body.

This slimming of the vehicle width improves the rider foot-landing characteristic and, with respect to the connecting tube 84, the detour for preventing the interference with the cushion unit 14 is further reducible in comparison with the related-art one, so the further improvement of the intake efficiency is expectable.

Although a rear-wheel suspension system for a two-wheeled vehicle according to this embodiment has been described above, the above-described embodiment relates to one example of the best mode of the present invention, and the present invention is not limited to this but it is acceptable to cover all changes of the embodiment herein which do not constitute departures from the scope of the invention.

To provide a rear-wheel suspension system for a two-wheeled vehicle capable of further slimming a vehicle width, an upper end of a coil spring 14d of a cushion unit 14 having a tubular damper case 14a, a rod 14b connected to a piston lying inside the cushion unit 14 and protrusively provided to be capable of making strokes with respect to the tubular damper case 14a and an external hydraulic sub-tank 14c is positioned to be lower than an upper end of the cushion unit 14, and vehicle body component parts including a connecting tube 84 and the sub-tank 14c are disposed to be close to the cushion unit 14 above the coil spring 14d.

## Claims

1. A two-wheeled vehicle with a rear-wheel suspension system comprising:
a pair of right- and left-side center frames (5) connected to a rear portion of a main frame (4) extending rearwardly from a head pipe (3) and extending downwardly; a swing arm (12) a front portion of which is pivotally supported by the center frames (5) and a rear portion of which is made to support a rear wheel (9); and a cushion unit (14), disposed such that its longitudinal direction coincides with a vertical direction, an upper portion of which is pivotally supported on a vehicle body side between the center frames (5) and a lower portion of which is pivotally supported on the swing arm (12) side,
wherein the cushion unit (14) includes a tubular damper case (14a) internally including a cylinder (14g), a rod (14b) connected to a piston (14h) arranged within the cylinder (14g) and a spring (14d) disposed around the cushion unit (14), and
wherein a connecting tube (84) connects a throttle body (82) placed in front of the cushion unit (14) and an air cleaner (83) placed in the rear of the cushion unit (14),
**characterized in that**
the cushion unit (14) further includes a sub-tank (14c) integrally connected to the damper case (14a),
the connecting tube (84) and the sub-tank (14c) are arranged at the right and left sides, respectively, in a state where the damper case (14a) is interposed therebetween,
an upper end of the spring (14d) is positioned to be lower than an upper end of the damper case (14a), and
the connecting tube (84) and the sub-tank (14c) are disposed to be close to the damper case (14a) above the spring (14d).

2. The two-wheeled vehicle according to claim 1, wherein a muffler (86) is placed on the sub-tank (14c) side and wherein an exhaust pipe (85) connected to the muffler (86) and secured to the exhaust side of an engine (81) of the two-wheeled vehicle is arranged below the sub-tank (14c).

3. The two-wheeled vehicle according to claim 1, wherein the lower portion of the sub-tank (14c) is slightly inclined outwardly to make a required angle (θ).

4. The two-wheeled vehicle according to claim 1, wherein the upper end of the spring (14d) is positioned to be lower than an upper end of the cylinder (14g) and the sub-tank (14c) is integrally formed in a state brought close to the cylinder (14g) above the spring (14d) so as to combine a portion of a wall surface constituting the cylinder and a portion of a wall surface constituting the sub-tank (14c).

## Patentansprüche

1. Zweiradfahrzeug mit einem Hinterradaufhängungssystem, umfassend:
ein Paar von rechts- und linksseitigen Zentralrahmen (5), welche mit einem hinteren Abschnitt von einem Hauptrahmen (4) verbunden sind, welcher sich von einem Kopfrohr (3) aus nach hinten und nach unten erstreckt; einen Schwingenarm (12), wobei ein vorderer Abschnitt davon schwenkbar durch die Mittelrahmen (5) gelagert ist und ein hinterer Abschnitt davon dazu ausgebildet ist, ein Hinterrad (9) zu lagern; und eine Dämpfereinheit (14), welche derart angeordnet ist, dass ihre Längsrichtung mit einer vertikalen Richtung übereinstimmt, wobei ein oberer Abschnitt davon schwenkbar auf einer Fahrzeugkörperseite zwischen den Mittelrahmen (5) gelagert ist und ein unterer Abschnitt davon schwenkbar auf der Seite des Schwingenarms (12) gelagert ist,
wobei die Dämpfereinheit (14) ein rohrförmiges Dämpfergehäuse (14a) umfasst, welches im Inneren einen Zylinder (14g) umfasst, eine Stange (14b) umfasst, welche mit einem Kolben (14h) verbunden ist, welcher innerhalb des Zylinders (14g) angeordnet ist, und eine Feder (14d) umfasst, welche um die Dämpfereinheit (14) herum angeordnet ist, und
wobei ein Verbindungsrohr (84) einen vor der Dämpfereinheit (14) angeordneten Drosselkörper (82) und einen hinter der Dämpfereinheit (14) angeordneten Luftfilter (83) verbindet,
**dadurch gekennzeichnet, dass**
die Dämpfereinheit (14) ferner einen Nebenbehälter (14c) umfasst, welcher integral mit dem Dämpfergehäuse (14a) verbunden ist,
das Verbindungsrohr (84) und der Nebenbehälter (14c) jeweils auf der rechten und der linken Seite angeordnet sind, in einem Zustand, in welchem das Dämpfergehäuse (14a) dazwischen angeordnet ist,
ein oberes Ende von der Feder (14d) derart angeordnet ist, dass es tiefer als ein oberes Ende von dem Dämpfergehäuse (14a) ist, und
das Verbindungsrohr (84) und der Nebenbehälter (14c) derart angeordnet sind, dass sie nahe dem Dämpfergehäuse (14a) oberhalb der Feder (14d) angeordnet sind.

2. Zweiradfahrzeug nach Anspruch 1, wobei ein Auspufftopf (86) auf der Seite des Nebenbehälters (14c) angeordnet ist, und wobei ein Auspuffrohr (85), welches mit dem Auspufftopf (86) verbunden ist und an der Auslassseite von einem Motor (81) von dem Zweiradfahrzeug befestigt ist, unterhalb des Nebenbehälters (14c) angeordnet ist.

3. Zweiradfahrzeug nach Anspruch 1, wobei der untere Abschnitt von dem Nebenbehälter (14c) etwas auswärts geneigt ist, um einen erforderlichen Winkel θ zu erzeugen.

4. Zweiradfahrzeug nach Anspruch 1, wobei das obere Ende von der Feder (14d) derart angeordnet ist, dass es niedriger als ein oberes Ende von dem Zylinder (14g) ist, und der Nebenbehälter (14c) integral in einem Zustand ausgebildet ist, in welchem er oberhalb der Feder (14d) nahe an den Zylinder (14g) gebracht ist, sodass ein Abschnitt von einer Wandfläche, welche den Zylinder bildet, und ein Abschnitt von einer Wandfläche, welche den Nebenbehälter (14c) bildet, verbunden sind.

## Revendications

1. Véhicule à deux roues comprenant un système de suspension de roue arrière, comprenant une paire de cadres centraux droit et gauche (5) qui sont connectés à une partie arrière d'un cadre principal (4) qui s'étend vers l'arrière à partir d'une tubulure de refoulement (3) et qui s'étend vers le bas; un bras oscillant (12) dont une partie avant est supportée de façon pivotante par les cadres centraux (5), et dont une partie arrière est conçue de manière à supporter une roue arrière (9); et une unité de coussin (14) qui est disposée de telle sorte que sa direction longitudinale coïncide avec une direction verticale, dont une partie supérieure est supportée de façon pivotante sur un côté de corps de véhicule entre les cadres centraux (5), et dont une partie inférieure est supportée de façon pivotante sur le côté du bras oscillant (12),
dans lequel l'unité de coussin (14) comprend un manchon d'amortissement tubulaire (14a) qui contient intérieurement un cylindre (14g), une tige (14b) connectée à un piston (14h) qui est agencé à l'intérieur du cylindre (14g), et un ressort (14d) qui est disposé autour de l'unité de coussin (14), et
dans lequel un tube de connexion (84) connecte un corps d'étranglement (82) qui est placé à l'avant de l'unité de coussin (14) et un filtre à air (83) qui est placé à l'arrière de l'unité de coussin (14),
**caractérisé en ce que**:
l'unité de coussin (14) comprend en outre un réservoir secondaire (14c) qui est intégralement connecté au manchon d'amortissement (14a),
le tube de connexion (84) et le réservoir secondaire (14c) sont agencés sur les côtés droit et gauche, respectivement, dans un état dans lequel le manchon d'amortissement (14a) est intercalé entre ceux-ci,
une extrémité supérieure du ressort (14d) est positionnée de manière à être située plus bas qu'une extrémité supérieure du manchon d'amortissement (14a), et
le tube de connexion (84) et le réservoir secondaire (14c) sont disposés de manière à être proches du manchon d'amortissement (14a) au-dessus du ressort (14d).

2. Véhicule à deux roues selon la revendication 1, dans lequel un pot d'échappement (86) est placé sur le côté du réservoir secondaire (14c), et dans lequel un tuyau d'échappement (85) connecté au pot d'échappement (86) et fixé au côté d'échappement d'un moteur (81) du véhicule à deux roues est agencé en dessous du réservoir secondaire (14c).

3. Véhicule à deux roues selon la revendication 1, dans lequel la partie inférieure du réservoir secondaire (14c) est légèrement inclinée vers l'extérieur de manière à former un angle requis (θ).

4. Véhicule à deux roues selon la revendication 1, dans lequel l'extrémité supérieure du ressort (14d) est positionnée de manière à être située plus bas qu'une extrémité supérieure du cylindre (14g), et le réservoir secondaire (14c) est intégralement formé dans un état rapproché du cylindre (14g) au-dessus du ressort (14d) de manière à combiner une partie d'une surface de paroi qui constitue le cylindre et une partie d'une surface de paroi qui constitue le réservoir secondaire (14c).
